# FASCICULE DE BREVET EUROPEEN

(11) **EP 0 734 835 B1**
(45) Date de publication et mention de la délivrance du brevet: **10.02.1999**
(21) Numéro de dépôt: 96420097.6
(22) Date de dépôt: 26.03.1996
(51) Int. Cl.: B29C 49/00

(54) **Circuit d'alimentation en vide pour installation de fabrication de tubes annelés**
Vakuumzuführkreislauf für eine Anlage zum Herstellen von Wellenrohren
Vacuum supply circuit for a plant to produce corrugated tubes

(30) Priorité: 28.03.1995 FR 9503982
(43) Date de publication de la demande: 02.10.1996
(73) Titulaire: CORELCO, 01920 Manziat (FR)
(72) Inventeur: Courant, Alain, 01190 Chavannes sur Reyssouze (FR)
(74) Mandataire: Perrier, Jean-Pierre

(56) Documents cités:
- EP-A- 0 048 113
- EP-A- 0 359 089
- WO-A-85/01471
- DE-B- 1 176 347

## Description

L'invention concerne les installations pour la fabrication de tubes annelés comportant, de part et d'autre de la trajectoire d'une paraison tubulaire en matière synthétique sortant d'une extrudeuse, deux brins parallèles appartenant à deux chaînes sans fin de coquilles.

Dans ce type d'installation, chaque coquille est en forme de bloc prismatique comportant en section transversale trois faces de guidage et une face de laquelle débouche une empreinte semi cylindrique dont la face interne comporte une alternance de nervures et de rainures semi circulaires pour former les anneaux du tube. Chaque coquille est juxtaposée à chacune de ses voisines de la même chaîne et comporte, sur ses faces extrêmes, des chanfreins arrière pour faciliter son angulation par rapport aux coquilles voisines, lorsque la chaîne de coquilles aborde les zones semi circulaires de retournement de son circuit de déplacement.

Dans la zone de formation de l'annelage, les deux brins de chaîne, avec les empreintes en vis à vis, passent dans un bâti fixe coopérant avec les faces de guidage et assurant le serrage l'une contre l'autre des coquilles en vis à vis, de même que leur guidage et leur entraînement en translation.

Dans chaque chaîne, chaque coquille comporte une empreinte pour la réalisation d'un tube annelé de diamètre déterminé, de sorte que pour fabriquer un tube de diamètre différent, il faut changer les coquilles des deux chaînes, ce qui exige du temps et de la mise en oeuvre.

Pour remédier à cela tout en réduisant l'investissement, il est connu de réaliser, dans chaque coquille, deux empreintes superposées de diamètres différents et de monter l'installation sur un châssis réglable verticalement de manière que, lors du changement de fabrication, il suffise de déplacer ce châssis pour amener le plan médian horizontal d'une série d'empreintes de même diamètre dans le plan médian horizontal de la filière débitant la paraison. Cette technique est couramment utilisée pour la fabrication de tubes annelés formés avec l'aide d'une pression interne, fournie par un fluide et notamment de l'air débité par un conduit axial disposé dans le prolongement d'une extrudeuse.

La transposition de cette technique de moulage par coquilles bi-empreintes au procédé de moulage utilisant une dépression pour plaquer la matière de la paraison contre la paroi des empreintes n'est pas immédiate en raison des problèmes posés par l'alimentation en vide de la seule série d'empreintes utilisées. En effet, dans ce type de fabrication par dépression, chacune des empreintes d'un moule communique, par des canaux, avec un circuit d'alimentation interne qui est raccordable à une source d'aspiration, au moins durant sa partie de trajectoire pendant laquelle est formé l'annelage. Dans le cas de coquilles bi-empreintes, il est nécessaire d'interrompre l'alimentation en vide des empreintes non utilisées, à défaut de quoi la dépression dans les empreintes utilisées est insuffisante et inconstante et conduit à des malfaçons.

Pour remédier à cela, une première solution consiste à disposer, dans chaque coquille, une vanne de distribution pour orienter le débit d'aspiration vers l'un ou l'autre des circuits aboutissant à l'une des deux empreintes.

Cela augmente le coût des empreintes et impose d'actionner la vanne de chaque coquille lors du changement d'empreinte avec, pour conséquence, d'augmenter le temps de réglage entre deux fabrications.

La présente invention a pour objet de fournir un circuit d'alimentation ne surenchérissant pas le coût des coquilles, nécessitant un temps réduit pour s'adapter aux besoins d'une nouvelle production, ne modifiant ni les conditions de guidage, ni les conditions de refroidissement des coquilles et n'influant pas sur les conditions de formation de la dépression dans les empreintes.

A cet effet, ce circuit d'alimentation comprend, pour chacune des empreintes de chacune des coquilles des deux chaînes de coquilles, un circuit interne d'alimentation qui, indépendant des circuits des empreintes juxtaposées, débouche dans une lumière oblongue ménagée dans l'une des faces de guidage de la coquille, parallèlement à la trajectoire de déplacement de la coquille, tandis que le bâti de l'installation comporte en vis à vis de chacune des faces de guidage des coquilles des deux chaînes, c'est à dire des faces desquelles débouche le circuit interne, un corps de distribution s'étendant sur la longueur du bâti et présentant deux portées longitudinales qui, parallèles aux chaînes de coquilles, sont plaquées avec étanchéité contre les deux zones desquelles débouchent les circuits internes d'alimentation et sont traversées par les deux branches secondaires d'un circuit d'alimentation externe, ce circuit étant muni, à la jonction de ses deux branches secondaires avec une branche principale, d'une vanne de sélection à trois voies.

Ce mode d'alimentation présente l'avantage de ne pas surenchérir le coût des coquilles, de ne pas augmenter leur épaisseur, ce qui aurait, pour conséquence, d'augmenter l'encombrement de la chaîne, et surtout d'être disposé, sur une face de guidage de la coquille qui n'est pas en relation avec les moyens d'entraînement et qui n'est donc pas soumise à une lubrification abondante pouvant être aspirée par la dépression. En outre, le refroidissement des coquilles par les autres faces n'est pas perturbé, de sorte que ce mode d'alimentation n'affecte en rien les conditions de fabrication du conduit annelé.

D'autres caractéristiques et avantages ressortiront de la description qui suit en référence au dessin schématique annexé représentant, à titre d'exemples, plusieurs formes d'exécution de ce dispositif d'alimentation.
Figure 1 est une vue en plan par dessus représentant, de façon schématique, une installation pour la fabrication de tubes annelés,
Figure 2 est une vue partielle en perspective avec coupe partielle d'une coquille et du corps de distribution dans une première forme d'exécution du dispositif,
Figures 3 et 4 sont des vues en coupe transversale de coquilles montrant deux autres formes d'exécution de ce circuit d'alimentation.

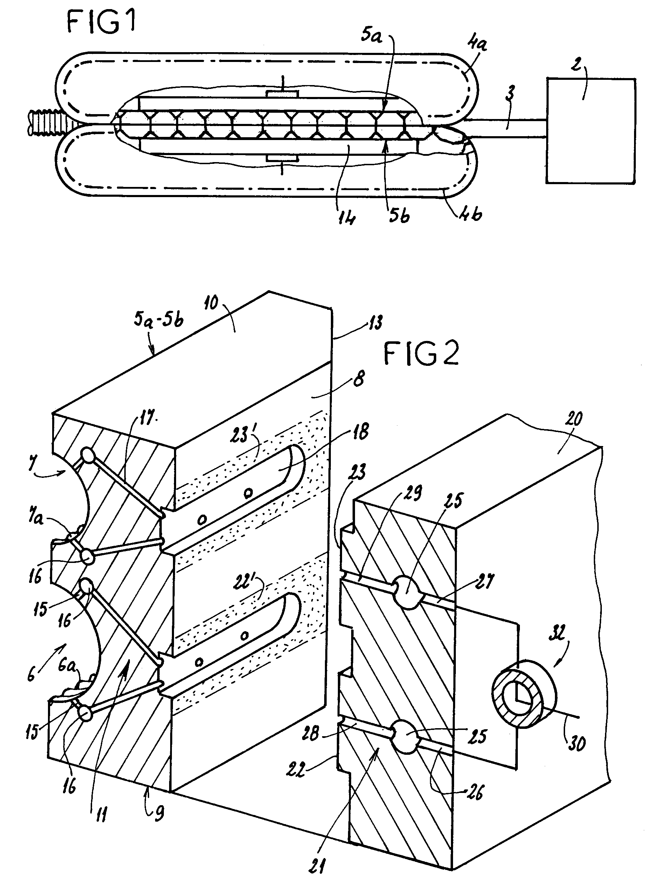

A la figure 1 représentant, de manière schématique l'installation pour la fabrication des tubes annelés, la référence numérique 2 désigne une machine d'extrusion dont la tête d'extrusion 3 débite une paraison tubulaire. Les références 4a, 4b désignent deux chaînes de coquilles 5a, 5b, de type bi-empreintes, c'est à dire comportant chacune, comme montré à la figure 2, deux empreintes superposées 6 et 7 aptes à réaliser des conduits annelés de diamètres différents.

Les deux chaînes 4a, 4b sont disposées de part et d'autre de la trajectoire de déplacement de la paraison sortant de la tête d'extrusion 3 et de manière que leurs deux brins parallèles soient disposés de part et d'autre de cette trajectoire. Chaque coquille est formée par un bloc prismatique comportant, en section transversale, trois faces planes de guidage, à savoir une face dorsale 8, une face inférieure 9 et une face supérieure 10. A leurs extrémités, les coquilles sont bordées par un chanfrein postérieur 13.

Lorsque les coquilles parviennent dans la zone de formation du conduit annelé, elles pénètrent dans un bâti 14 qui, non seulement, assure leur guidage en translation mais également les plaque contre les coquilles en vis à vis. Ce bâti comporte des moyens assurant l'entraînement en translation positive des coquilles, telles que des roues dentées motrices coopérant avec des crémaillères saillant de l'une des faces de chaque coquille.

L'installation ici représentée étant du type assurant la formation de l'annelage extérieur au moyen d'une dépression réalisée dans l'empreinte, entre la paroi de cette empreinte et la paraison, chacune des ondulations 6a et 7a de chacune des empreintes 6 et 7 communique, par des canaux radiaux 15, avec des conduits de distribution 16 ménagés longitudinalement dans chaque coquille et obturés à leurs deux extrémités. Chacun des conduits 16 est lui-même alimenté par des canaux transversaux 17 débouchant de l'une des faces de guidage, et par exemple de la face dorsale 8, dans la forme d'exécution montrée à la figure 2.

Les canaux 15, 16 et 17 constituent le circuit interne 11 d'alimentation de chaque coquille 5a, 5b et ce circuit est lui-même alimenté par un circuit externe 21 qui sera décrit plus loin.

Dans la forme d'exécution représentée à la figure 2, les canaux transversaux 17 du circuit d'alimentation interne débouchent dans une lumière oblongue 18, débouchant elle-même de la face dorsale 8 de la coquille correspondante. Cette lumière oblongue assure la répartition de la dépression qui lui est amenée par le circuit d'alimentation externe.

Le circuit externe est ménagé dans un corps de distribution 20 qui est disposé dans le bâti 14 et qui s'étend longitudinalement et parallèlement contre le brin correspondant de l'une des chaînes 4a ou 4b. En d'autres termes, chaque chaîne est affectée, sur sa partie dorsale, à un corps de distribution.

Dans la forme d'exécution représentée à la figure 2, ce corps de distribution comporte deux portées longitudinales 22, 23 aptes à venir en appui étanche contre les faces dorsales 8 des coquilles 5a ou 5b et plus précisément contre les zones, respectivement 22' et 23', délimitées par les traits mixtes à la figure 2.

Le circuit externe d'alimentation 21, inclus dans chaque corps de distribution 20, est composé de deux canaux longitudinaux de distribution 25, obturés à chacune de leurs extrémités, et dans chacun desquels débouchent, d'une part, deux canaux d'alimentation 26 et 27 et d'autre part, plusieurs canaux 28 et 29 débouchant, respectivement, des portées 22, 23.

Les canaux 26 et 27 constituent les deux branches secondaires d'un circuit d'alimentation comportant également à une branche principale 30, à laquelle elles se raccordent avec interposition d'une vanne de sélection 32 à trois voies.

On conçoit aisément que en fonctionnement, la vanne 32 oriente le débit d'aspiration provenant du conduit 30 vers l'une ou l'autre des branches secondaires 26, 27 et permet donc, par le circuit de distribution externe correspondant ménagé dans le corps de distribution 20 et par le circuit d'alimentation interne en vis à vis, ménagé dans les coquilles 5a ou 5b, d'orienter la dépression sur l'une ou l'autre des empreintes 6 ou 7.

Il apparait donc que, lors d'un changement de fabrication consistant, par exemple, à utiliser les empreintes 7 à la place des empreintes 6, pour ajuster le débit d'aspiration, il suffit d'actionner les deux vannes 32 disposées de part et d'autre de la machine. Dans ces conditions, la modification du circuit d'alimentation s'effectue très rapidement.

La figure 2 montre bien que le circuit d'alimentation interne ménagé dans les coquilles n'exige pas d'augmenter l'épaisseur de celles-ci et nécessite des usinages peu onéreux, pouvant être réalisés aussi bien sur les faces dorsales 8 des coquilles que sur les faces inférieures 9 ou sur les faces supérieures 10, en fonction des conditions de fonctionnement et d'entraînement des chaînes de coquilles. De même, le circuit externe d'alimentation et les corps de distribution ne conduisent pas à une modification profonde de l'installation. On notera d'ailleurs que les canaux 25, 26 et 27, qui sont représentés comme étant dans le corps de distribution, peuvent également être remplacés par des conduits disposés à l'extérieur de ce corps.

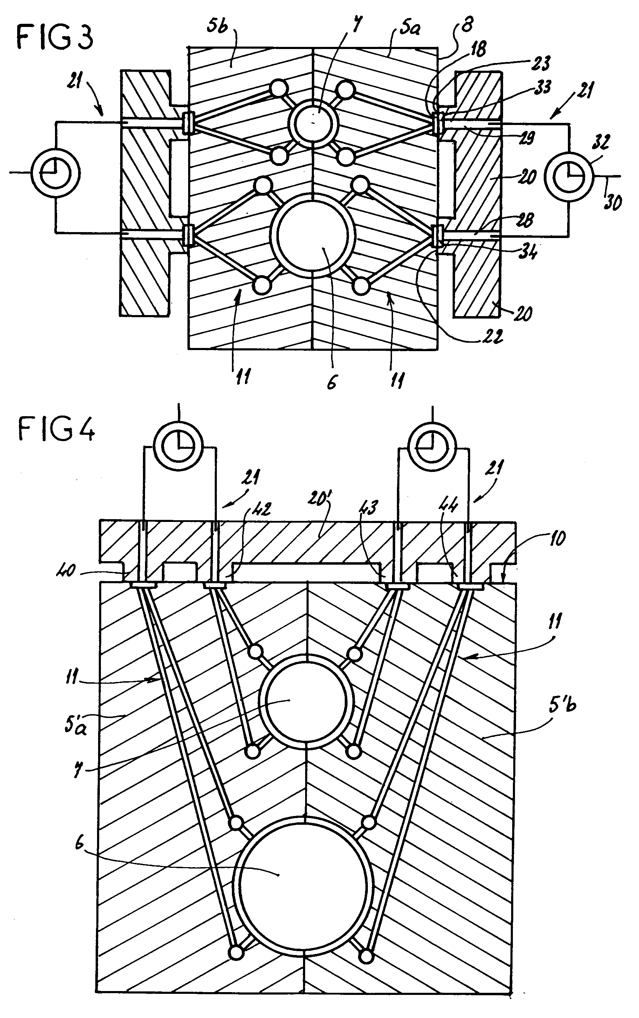

Dans la forme d'exécution représentée à la figure 3, les canaux 28, 29 du circuit externe 21 débouchent dans des lumières longitudinales 33, 34 ménagées dans les portées 22, 23, et en vis-à-vis des lumières 18 des coquilles.

Cette disposition favorise la répartition de la dépression et réduit les variations de débits entre le circuit externe 21 et les circuits internes 11.

Exceptée cette différence, le dispositif est en tous points similaire à celui décrit dans la forme d'exécution précédente.

A la figure 4, l'alimentation des coquilles 5'a, 5'b est assurée par le dessus au moyen d'un unique corps de distribution 20' contenant deux circuits externes d'alimentation 21, assurant l'alimentation des circuits internes 11 d'alimentation ménagés dans chacune des coquilles 5'a, 5'b. Ce corps comporte des portées 40, 42, 43, 44 qui viennent en appui sur les faces supérieures 10 des coquilles 5'a, 5'b.

Les formes d'exécution décrites aux figures 2 et 3 sont intéressantes dans le cas d'une installation dans laquelle l'entraînement de chacune des coquilles est assuré par le haut ou par le bas, et son refroidissement par le bas ou par le haut, tandis que la forme d'exécution de figure 4 s'applique aux installations dans lesquelles l'entraînement est effectué latéralement et le refroidissement est assuré par le dessous et latéralement.

## Revendications

1. Circuit d'alimentation en vide pour installation pour la fabrication par dépression externe de tubes annelés, du type comportant, de part et d'autre de la trajectoire d'une paraison tubulaire en matière synthétique sortant d'une extrudeuse (3), deux brins parallèles appartenant à deux chaînes sans fin de coquilles (5a, (b) bi-empreintes, en forme de bloc prismatique ayant trois faces de guidage (8, 9, 10) planes et dans laquelle, d'une part, les deux brins de chaîne passent, dans la zone de formation de l'annelage, dans un bâti fixe (14) coopérant avec les faces de guidage des coquilles (5a, 5b) et assurant le serrage l'une contre l'autre des coquilles (5a, 5b) en vis à vis, de même que leur guidage et leur entraînement en translation, et, d'autre part, chaque empreinte (6 ou 7) d'une coquille (5a, 5b) communique par des canaux (15), sensiblement radiaux, avec un circuit d'alimentation en vide ménagé dans la coquille,
caractérisé en ce que ce circuit d'alimentation comprend, pour chacune des empreintes (6, 7) de chacune des coquilles (5a, 5b) des deux chaînes de coquilles, un circuit interne (11) d'alimentation qui, indépendant des circuits des empreintes juxtaposées, débouche dans une lumière oblongue (18) ménagée dans l'une des faces (8, 9, 10) de guidage de la coquille, parallèlement à la trajectoire de déplacement de la coquille, tandis que le bâti (14) de l'installation comporte en vis à vis de chacune des faces de guidage et d'alimentation des coquilles des deux chaînes, c'est à dire des faces desquelles débouche le circuit interne (11), un corps de distribution (20) s'étendant sur la longueur du bâti et présentant deux portées longitudinales (22, 23) qui, parallèles aux chaînes de coquilles, sont plaquées avec étanchéité contre les deux zones desquelles débouchent les circuits internes (11) d'alimentation et sont traversées par les deux branches secondaires (26, 27) d'un circuit externe d'alimentation (21), ce circuit (21) étant muni, à la jonction de ses deux branches secondaires (26, 27) avec une branche principale (30), d'une vanne (32) de sélection à trois voies.

2. Circuit selon la revendication 1, caractérisé en ce que les corps de distribution (20) sont déposés latéralement et de part et d'autre des deux brins centraux des deux chaînes (4a, 4b) de coquilles avec leurs portées (22,23) venant en contact avec les faces dorsales (8) des coquilles (5a, 5b).

3. Circuit selon la revendication 1, caractérisé en ce que les corps de distribution (20) sont disposés au-dessus des deux brins centraux des deux chaînes (4a, 4b) de coquilles avec leurs portées (22,23) en appui sur les faces supérieures (10) des coquilles.

## Claims

1. A vacuum supply circuit for an installation for the manufacture of corrugated tubes by external depression, of the type including, on either side of the path of a tubular preform of synthetic material emerging from an extruder (3), two parallel sides belonging to two endless chains of bi-impression moulds (5a,5b) in the shape of prismatic blocks having three plane guiding faces (8,9,10) and within which, on the one hand, the two chain sides pass, in the zone of formation of the corrugation, into a fixed frame (14) co-operating with the guiding faces of the moulds (5a,5b) and effecting the clamping against one another of the opposing moulds (5a,5b), as well as their guiding and driving in translation, and, on the other hand, each die cavity (6 or 7) of a mould (5a,5b) communicates through two substantially radial channels (15) with a vacuum supply circuit formed within the mould, characterised in that the supply circuit includes, for each of the die cavities (6,7) of each of the moulds (5a, 5b) of the two chains of moulds, an internal supply circuit (11) which, independent from the circuits of the juxtaposed die cavities, opens into an elongate slot (18) formed in one of the guiding faces (8,9,10) of the mould, parallel to the displacement path of the mould, whilst the frame (14) of the installation has, opposed to each of the guiding and supply faces of the moulds of the two chains, that is to say the faces at which the internal circuit (11) opens, a distribution body (20) extending over the length of the frame and having two longitudinal bearing areas (22,23) which are parallel to the chains of moulds, are placed in sealing engagement against the two zones at which open the internal supply circuits (11) and have the two secondary branches (26,27) of an external supply circuit (21) extending therethrough, this circuit (21) being provided, at the junction of its two secondary branches (26,27), with a main branch (30), of a three-way selection valve (32).

2. A circuit according to Claim 1, characterised in that the distribution bodies (20) are placed laterally and to either side of the two central sides of the two chains (4a,4b) of moulds with their bearing areas (22,23) coming into contact with the dorsal faces (8) of the moulds (5a,5b).

3. A circuit according to Claim 1, characterised in that the distribution bodies (20) are disposed above the two central sides of the two chains (4a,4b) of moulds with their bearing areas (22,23) bearing on the upper faces (10) of the moulds.

## Patentansprüche

1. Vakuumversorgungsanordnung für eine Einrichtung zur Herstellung gewellter Rohre mittels äußeren Unterdrucks vom Typ mit zwei beidseits des Wegs eines aus einem Extruder (3) austretenden rohrförmigen Vorformlings aus Kunststoffmaterial angeordneten parallelen Trummen, die zu zwei endlosen Ketten mit Doppelvertiefungsbacken (5a, 5b) in Form prismatischer Blöcke mit drei planen Führungsflächen (8, 9, 10) gehören, und wobei zum einen die beiden Kettentrumme in der Bildungszone für die Wellung in einem feststehenden Rahmen (14) laufen, welcher mit den Führungsflächen der Backen (5a, 5b) zusammenwirkt und das gegenseitige Aneinanderdrücken der gegenüberliegenden Backen (5a, 5b) ebenso wie deren Führung und deren translatorischen Antrieb übernimmt, und zum anderen jede Vertiefung (6 oder 7) einer Backe (5a, 5b) über im wesentlichen radiale Kanäle (15) mit einem in der Backe ausgebildeten Vakuumversorgungskreis in Verbindung steht,
**dadurch gekennzeichnet, daß** der Versorgungskreis für jede der Vertiefungen (6, 7) jeder der Basken (5a, 5b) der beiden Backenketten einen internen Versorgungskreis (11) umfaßt, dar unabhängig von den Kreisen der nebenliegenden Vertiefungen in einen länglichen Schlitz (18) mündet, welcher in einer dar Führungsflächen (8, 9, 10) der Backe parallel zum Verschiebeweg der Backe ausgebildet ist, wahrend der Rahmen (14) der Einrichtung in Gegenüberlage zu jeder der Führungs- und Versorungsflächen der Backen der beiden Ketten, d.h. der Flächen, in denen der interne Kreis (11) mündet, einen sich über die Länge des Rahmens erstreckenden Verteilkörper (20) umfaßt, welcher zwei longitudinale, zu den Backenketten parallele Anlageflächen (22, 23) aufweist, die dicht gegen die beiden Zonen, in denen die internen Versorgungskreise (11) münden, gedrückt werden und von den beiden Sekundärzweigen (26, 27) eines externen Versorgungskreises (21) durchsetzt sind, wobei dieser Kreis (21) an der Verbindungsstelle seiner beiden Sekundärzweige (26, 27) mit einem Hauptzweig (30) mit einem Dreiwege-Wählventil (32) versehen ist.

2. Anordnung nach Anspruch 1, dadurch gekennzeichnet, daß die Verteilkörper (20) seitlich und beidseits der beiden Mitteltrumme der beiden Backenketten (4a, 4b) angeordnet sind, wobei ihre Anlageflächen (22, 23) in Kontakt mit den Rückenflächen (8) der Backen (5a, 5b) gelangen.

3. Anordnung nach Anspruch 1, dadurch gekennzeichnet, daß die Verteilkörper (20) oberhalb der beiden Mitteltrumme der beiden Backenketten (4a, 4b) angeordnet sind, wobei ihre Anlageflächen (22, 23) an den oberen Flächen (10) der Backen anliegen.
